## Europäisches Patentamt

## European Patent Office

## Office européen des brevets

(19)

(11) EP 0 665 868 B1

(12) **EUROPÄISCHE PATENTSCHRIFT**

(45) Veröffentlichungstag und Bekanntmachung des Hinweises auf die Patenterteilung:
**08.01.1997 Patentblatt 1997/02**

(51) Int Cl.6: **C09D 5/10**, C08L 83/04, C09D 183/04

(21) Anmeldenummer: **93922952.2**

(22) Anmeldetag: **14.10.1993**

(86) Internationale Anmeldenummer:
**PCT/EP93/02841**

(87) Internationale Veröffentlichungsnummer:
**WO 94/09075 (28.04.1994 Gazette 1994/10)**

(54) **WÄSSRIGE BINDEMITTEL UND BESCHICHTUNGSMITTEL**

AQUEOUS BINDERS AND COATING AGENTS

LIANTS ET AGENTS DE REVETEMENT AQUEUX

(84) Benannte Vertragsstaaten:
**BE DE ES FR GB IT NL SE**

(30) Priorität: **20.10.1992 DE 4235323
20.10.1992 DE 4235372**

(43) Veröffentlichungstag der Anmeldung:
**09.08.1995 Patentblatt 1995/32**

(73) Patentinhaber: **Wacker-Chemie GmbH
D-81737 München (DE)**

(72) Erfinder:
- **PAUL, Klaus-Peter
  D-84489 Burghausen (DE)**
- **GELTINGER, Magdalena
  D-84533 Haiming (DE)**
- **HAUSLEITNER, Petra
  D-84367 Zeilarn (DE)**

(56) Entgegenhaltungen:
EP-A- 0 143 541    EP-A- 0 365 439
EP-A- 0 410 899    EP-A- 0 419 986

**Beschreibung**

Die Erfindung betrifft wäßrige Bindemittel und wäßrige Beschichtungszusammensetzungen sowie Verfahren zur Herstellung der wäßrigen Bindemittel und wäßrigen Beschichtungszusammensetzungen.

Es sind anorganische Bindemittel für Zinkstaub oder Aluminiumflocken bekannt, die aus Silicaten, wie Siliciumdioxid und Kaliumdioxid und/oder Natriumdioxid und Wasser bestehen und im allgemeinen als Wassergläser bezeichnet werden. Hierzu sei beispielsweise auf US-A 4,162,169 verwiesen.

In DE-A 40 22 186 ist ein nichtwäßriges, zinkhaltiges Korrosionsschutzmittel für phosphatierte Metalloberflächen beschrieben, das Zinkstaub und/oder Zinkschuppen, eine organische Lösung eines Polykieselsäureesters und gegebenenfalls einen Stabilisator enthält.

Aus DE-A 15 46 050 sind Mischpolymerisate aus Siloxanen und Silikaten bekannt, die die Korrosion von Metallen hemmen, die in Kontakt mit wäßrigen Flüssigkeiten kommen, denen die Mischpolymerisate als Korrosionsinhibitoren zugesetzt sind.

In der Broschüre "Silikophen$^R$ P40/W", Tego Chemie Service USA, Oktober 1989, ist Silikophen$^R$ P40/W, eine wäßrige Phenylmethylsiliconharzemulsion mit einem 50 %igen Feststoffgehalt, als Bindemittel für Zinkstaub beschrieben.

Es bestand die Aufgabe für die Einarbeitung von Metallpulver, insbesondere Zinkstaub, geeignete Bindemittel auf Wasserbasis bereitzustellen, mit denen wäßrige Beschichtungszusammensetzungen für Metalloberflächen erhältlich sind, die bei Raumtemperatur härten und Überzüge ergeben, die gute Korrosionsschutzeigenschaften, insbesondere im salzhaltigen Milieu, gute Lösungsmittel-, und/oder Wasserbeständigkeiten und ein gutes Trocknungsverhalten aufweisen. Die Aufgabe wird durch die Erfindung gelöst.

Gegenstand der Erfindung sind wäßrige Beschichtungszusammensetzungen enthaltend (A) wäßriges Bindemittel ausgewählt aus der Gruppe, die aus

(A1) wäßrige Bindemittel enthaltend

(a) Organopolysiloxanharze und
(b) Monoorganosilanolate und/oder dessen durch Wasserabspaltung entstehende Kondensationsprodukte und
(c) Wasser und

(A2) wäßrige Bindemittel enthaltend

(b) Monoorganosilanolate und/oder deren durch Wasserabspaltung entstehende Kondensationsprodukte und
(c) Wasser, besteht,

(B) Metallpulver,
(C) gegebenenfalls Siliciumdioxide mit einer BET-Oberfläche von mindestens 50 m$^2$/g, die gegebenenfalls hydrophobiert sind, und
(D) gegebenenfalls Wasser.

Gegenstand der Erfindung ist weiterhin ein Verfahren zur Herstellung der wäßrigen Beschichtungszusammensetzung, bei dem

(A) wäßrige Bindemittel mit
(B) Metallpulver,
(C) gegebenenfalls Siliciumdioxiden mit einer BET-Oberfläche von mindestens 50 m$^2$/g, die gegebenenfalls hydrophobiert sind, und
(D) gegebenenfalls Wasser

sowie gegebenenfalls weiteren Stoffen vermischt werden.

Als Organopolysiloxanharze (a) werden bei den erfindungsgemäßen Bindemitteln vorzugsweise solche aus Einheiten der Formel

$$R_a SiO_{\frac{4-a}{2}} \qquad (I),$$

die 0 bis 10 Gew.-% Si-gebundenene Hydroxylgruppen und/oder Alkoxygruppen enthalten,
wobei R gleich oder verschieden ist und einen einwertigen Kohlenwasserstoffrest mit 1 bis 18 Kohlenstoffatomen je Rest und
a 0, 1, 2 oder 3, durchschnittlich 1 bis 1,5, bedeutet, verwendet.

Es können bei Raumtemperatur flüssige oder feste Organopolysiloxanharze (a) eingesetzt werden.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie Cyclopentyl-, Cyclohexyl-, Cycloheptylreste und Methylcyclohexylreste; Arylreste, wie der Phenyl-, Naphthyl-, Anthryl-und Phenanthrylrest; Alkarylreste, wie o-, m-, p-Tolylreste; Xylylreste und Ethylphenylreste; und Aralkylreste, wie der Benzylrest, der $\alpha$- und der ß-Phenylethylrest. Bevorzugt ist der Methyl- und Phenylrest.

Bei den erfindungsgemäß eingesetzten Organopolysiloxanharzen (a) kann es sich um eine Art von Organopolysiloxanharz oder um ein Gemisch von mindestens zwei verschiedenen Arten von Organopolysiloxanharzen handeln.

Als Monoorganosilanolate (b) werden bei den erfindungsgemäßen Bindemitteln vorzugsweise solche der Formel

$$R^1Si(OM)_m(OH)_{3-m} \tag{II},$$

wobei $R^1$ gleich oder verschieden ist und einen einwertigen Kohlenwasserstoffrest mit 1 bis 8 Kohlenstoffatomen je Rest,
M ein Alkalimetallkation oder eine Ammoniumgruppe und
m eine ganze oder gebrochene Zahl im Wert von 0,1 bis 3 bedeutet,

verwendet.

Beispiele für Reste $R^1$ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl, tert.-Pentylrest; Hexylreste, wie der n-Hexylrest; Heptylreste, wie der n-Heptylrest; Octylreste, wie der n-Octylrest und iso-Octylreste.

Ein bevorzugtes Beispiel für den Rest $R^1$ ist der Methylrest.

Beispiele für Reste M sind die Kationen der Alkalimetalle, wie die von Lithium, Natrium und Kalium, sowie Reste der Formel

$$^+NR^2_4,$$

wobei $R^2$ gleich oder verschieden ist und einen einwertigen Kohlenwasserstoffrest mit 1 bis 6 Kohlenwasserstoffen je Rest bedeutet.

Bevorzugte Beispiele für Reste M sind $Na^+$ und $K^+$.

Beispiele für Reste $R^2$ sind Alkylreste, wie Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl, tert.-Pentylrest und Hexylreste, wie der n-Hexylrest.

Bei den erfindungsgemäß eingesetzten Monoorganosilanolaten (b) kann es sich um eine Art oder auch um ein Gemisch aus mindestens zwei verschiedenen Arten derartiger Monoorganosilanolate handeln.

Zur Herstellung der erfindungsgemäß eingesetzten wäßrigen Emulsionen von Organopolysiloxanharzen werden Organopolysiloxanharze (a) nach den in der Silicon-Chemie üblichen Verfahren mit Wasser unter Zugabe von Emulgatoren emulgiert. Dabei kann der Emulgator, seiner chemischen Beschaffenheit entsprechend, sowohl in der Wasserphase als auch in der Ölphase vorgelegt werden. Der Emulgierschritt kann in üblichen, zur Herstellung von Emulsionen geeigneten Mischgeräten, wie schnellaufenden Stator-Rotor-Rührgeräten nach Prof. P. Willems, wie sie unter dem registrierten Warenzeichen "Ultra-Turrax" bekannt sind, erfolgen.

Die erfindungsgemäß eingesetzten wäßrigen Emulsionen enthalten Organopolysiloxanharze (a) vorzugsweise in Mengen von 25 bis 75 Gew.-%, bevorzugt 40 bis 60 Gew.-%, jeweils bezogen auf das Gesamtgewicht der wäßrigen Emulsionen.

Bei der Herstellung der wäßrigen Emulsionen können als Emulgatoren alle bisher bekannten, ionischen und nicht-ionischen Emulgatoren sowohl einzeln als auch in Mischungen verschiedener Emulgatoren eingesetzt werden, mit denen auch bisher beständige wäßrige Emulsionen von Organopolysiloxanharzen hergestellt werden konnten. Es können auch solche Emulgiermittel, wie sie in US-A 4,757,106 beschrieben sind, eingesetzt werden. Vorzugsweise werden nicht-ionische Emulgatoren eingesetzt. Beispiele für nicht-ionische Emulgatoren sind Fettalkoholpolyglycolether und teilverseifte Polyvinylalkohole. Fettalkoholpolyglycolether sind beispielsweise unter dem Handelsnamen "Arlypon SA4" oder "Arlypon IT16" bei der Fa. Grünau und teilverseifte Polyvinylalkohole beispielsweise unter dem Handelsnamen "Polyviol W25/140" bei der Fa. Wacker erhältlich.

Die erfindungsgemäß eingesetzten wäßrigen Emulsionen enthalten Emulgatoren in Mengen von vorzugsweise 0,1 bis 10 Gew.-%, bevorzugt 2 bis 4 Gew.-%, jeweils bezogen auf das Gesamtgewicht der wäßrigen Emulsionen.

Die erfindungsgemäß eingesetzten wäßrigen Lösungen enthalten Monoorganosilanolate (b) in Mengen von vorzugsweise 10 bis 70 Gew.-%, bevorzugt 40 bis 50 Gew.-%, jeweils bezogen auf das Gesamtgewicht der wäßrigen Lösungen.

Die erfindungsgemäß eingesetzten wäßrigen Lösungen von Monoorganosilanolaten (b) werden beispielsweise hergestellt durch Hydrolyse von Organotrichlorsilanen, wie Methyltrichlorsilanen, und anschließendes Lösen des Hydrolysats in einer wäßrigen Lösung eines Alkalihydroxids, wie Kaliumhydroxid.

Bei dem erfindungsgemäßen Verfahren zur Herstellung der wäßrigen Bindemittel werden die wäßrigen Lösungen von Monoorganosilanolaten (b) in Mengen von vorzugsweise 0,1 bis 50 Gew.-%, bevorzugt 2 bis 20 Gew.-%, jeweils bezogen auf das Gesamtgewicht der wäßrigen Emulsionen von Organopolysiloxanharzen (a), eingesetzt.

Als Metallpulver (B) wird bei den erfindungsgemäßen wäßrigen Korrosionsschutzmitteln vorzugsweise Zinkstaub, Aluminiumpulver oder Kupferpulver verwendet. Bevorzugt wird Zinkstaub mit einer durchschnittlichen Staubkorngröße von 2 bis 9 µm verwendet.

Zink reagiert mit Wasser im Alkalischen unter Wasserstoffentwicklung. Bei einem pH-Wert von kleiner als 8,5 ist die Wasserstoffentwicklung gering. Durch die Zugabe von Siliciumdioxid (C) wird eine Unterdrückung der Wasserstoffentwicklung erzielt.

Vorzugsweise werden bei den erfindungsgemäßen Beschichtungszusammensetzungen Siliciumdioxide (C) mit einer BET-Oberfläche von mindestens 50 $m^2/g$ mitverwendet.

Als Siliciumdioxide (C) mit einer BET-Oberfläche von mindestens 50 $m^2/g$ werden vorzugsweise pyrogen hergestellte Kieselsäuren verwendet. Es können auch gefällte Kieselsäuren mit einer BET-Oberfläche von mindestens 50 $m^2/g$ verwendet werden.

Die Siliciumdioxide (C) sind vorzugsweise hydrophobiert, beispielsweise durch die Behandlung mit Organosiliciumverbindungen, wie Hexamethyldisilazan, Organosilanen oder Organosiloxanen.

Die erfindungsgemäßen wäßrigen Beschichtungszusammensetzungen enthalten vorzugsweise

(A) 100 Gew.-teile wäßrige Bindemittel,
(B) 10 bis 1500 Gew.-teile, bevorzugt 50 bis 1000 Gew.-teile, Metallpulver,
(C) 0 bis 5 Gew.-teile, bevorzugt 1 bis 2 Gew.-teile, Siliciumdioxide mit einer BET-Oberfläche von mindestens 50 $m^2/g$, die gegebenenfalls hydrophobiert sind, und
(D) 0 bis 300 Gew.-teile, bevorzugt 50 bis 200 Gew.-teile, Wasser.

Die erfindungsgemäßen, wäßrigen Beschichtungszusammensetzungen können weitere Stoffe enthalten, die üblicherweise bei der Herstellung von Beschichtungszusammensetzungen mitverwendet werden können. Beispiele für weitere Stoffe sind Füllstoffe, wie Quarz, Diatomeenerde, Calciumsilikat, Zirkoniumsilikat, Zeolithe, Montmorrillonite, wie Bentonite, Glimmer, Metalloxidpulver, wie Aluminium-, Titan-, Eisen-, oder Zinkoxide bzw. deren Mischoxide, Bariumsulfat, Calciumcarbonat, Gips, Siliciumnitrid, Siliciumcarbid, Bornitrid, Keramik-, Glas- und Kunststoffpulver, Verdickungsmittel, wie Kieselsäuren, beispielsweise Kieselsäuren mit einer BET-Oberfläche von mindestens 50 $m^2/g$, und Korrosionsinhibitoren, wie Natriumphosphat, Zinkaluminiumphosphate und Chromate.

Die erfindungsgemäßen, wäßrigen Beschichtungszusammensetzungen können als 1-Komponenten-Systeme oder als 2-Komponenten-Systeme eingesetzt werden. Bei den 2-KomponentenSystemen befindet sich Metallpulver (B), bevorzugt Zinkstaub, in der ersten Komponente und die wäßrigen Bindemittel (A) und Siliciumdioxide (C) in der zweiten Komponente. Das Zusammenmischen der Komponenten erfolgt dann kurz vor der Verarbeitung.

Die erfindungsgemäßen, wäßrigen Beschichtungszusammensetzungen können auf jede Art von Metall aufgebracht werden, auf die auch bisher Metallpulver, insbesondere Zinkstaub, enthaltende Beschichtungszusammensetzungen aufgebracht worden sind. Unter Metallen sind in diesem Sinne auch Metallegierungen zu verstehen. Beispiele für Metalle sind Eisen und Stähle.

Die erfindungsgemäßen, wäßrigen Beschichtungszusammensetzungen werden vorzugsweise bei Raumtemperatur gehärtet.

Die erfindungsgemäßen, wäßrigen Beschichtungszusammensetzungen werden als Korrosionsschutzmittel und Grundierungsmittel verwendet. Sie ergeben Überzüge mit guten Temperaturbeständigkeiten und eignen sich daher für viele Einsatzgebiete, in denen Hitzebeständigkeit bis 420°C gefordert wird, z. B. zur Herstellung von Überzügen bei Tankern, Brücken, Bohrinseln, Kränen, öfen, Raffinerien, Verbrennungs- und Elektromotoren und Auspuffanlagen. Durch Auftragung eines temperaturbeständigen Decklackes, z.B. einer Emulsion des in Beispiel 2 beschriebenen Phenylmethylsiliconharzes mit Aluminiumpigmentierung, wobei der Decklack eingebrannt wird, auf die Korrosionsschutzschicht bzw. Grundierschicht läßt sich die Temperaturbeständigkeit auf 500 bis 600°C erhöhen. Weiterhin weisen die mit den erfindungsgemäßen Beschichtungsmitteln erhaltenen Überzüge gute Lösungsmittel- und Wasserbeständigkeiten sowie Nichtbrennbarkeit und ein gutes Schweißverhalten auf.

In den folgenden Beispielen beziehen sich alle Angaben von Teilen und Prozentsätzen auf das Gewicht, soweit nichts anderes angegeben ist.

**Beispiel 1:**

a) 255 Teile eines bei Raumtemperatur flüssigen Methylpolysiloxans aus $CH_3SiO_{3/2}$- und $(CH_3)_2SiO$-Einheiten mit einem Molverhältnis von 75 : 25, das 0,5 bis 1,5 Gew.-% Hydroxylgruppen und 2 bis 5 Gew.-% Ethoxygruppen enthält, 15 Teile Fettalkoholpolyglycolether (käuflich erwerblich unter dem Handelsnamen "Arlypon IT16" bei der Fa. Grünau) und 230 Teile Wasser wurden mittels eines schnellen Rührers emulgiert.

b) Eine 42 %ige wäßrige Kaliummethylsilanolatlösung wurde durch Umsetzung von äquivalenten Mengen Methyltrichlorsilan mit Kaliumhydroxid in wäßriger Phase unter Abspaltung von Salzsäure hergestellt.

c) 47,5 Teile der 50 %igen wäßrigen Siliconemulsion, dessen Herstellung oben unter a) beschrieben ist, wurden mit 2,5 Teilen der 42%igen wäßrigen Kaliummethylsilanolatlösung, dessen Herstellung oben unter b) beschrieben ist, vermischt. 50 Teile des so erhaltenen wäßrigen Bindemittels wurden mit 400 Teilen Zinkstaub mit einem durchschnittlichen Kornstaubdurchmesser von 4 bis 6 µm, 4,8 Teilen hydrophober, pyrogen hergestellter Kieselsäure mit einer BET-Oberfläche von $120 \pm 20$ m²/g (käuflich erwerblich unter dem Handelsnamen "HDK H15" bei der Fa. Wacker-Chemie), 100 Teilen Wasser, 32,5 Teilen blättchenförmigem Glimmer, 20 Teilen Antisedimentationspaste aus 10 bis 20 % organisch modifiziertem Smektit (käuflich erwerblich unter dem Handelsnamen "Bentone" bei der Fa. Kronos International Inc.) und 2 Teilen einer 10 %igen wäßrigen Natriumphosphatlösung (käuflich erwerblich unter dem Handelsnamen "Calgon N" bei der Fa. Merck) vermischt.

Das so erhaltene Beschichtungsmittel wurde mit einer Rakel in einer Naßfilmschichtdicke von 100 µm auf kaltgewalzten, matten Stahl einer Stärke von 0,8 mm aufgetragen. Der Überzug war nach 23 Minuten Trocknen bei Raumtemperatur griffest. Nach 24 Stunden bzw. 1 bis 6 Wochen Trocknen bei Raumtemperatur wurde von dem Überzug die Beständigkeit gegen Lösungsmittel bzw. Wasser geprüft durch Reiben unter leichtem Druck mit einem Wattestäbchen, dessen Ende mit Methylethylketon bzw. Wasser getränkt war. Es wurden die MEK-Abriebe (Resistenz gegen Methylethylketon) und die Wasserabriebe (Resistenz gegen Wasser) des Überzugs gemessen. Die Ergebnisse sind in Tabelle 1 zusammengefaßt. Aus der Tabelle 1 ist zu entnehmen, daß sich die Wasserbeständigkeiten deutlich ver- bessern.

### Tabelle 1:

|  | Wasserabriebe | MEK-Abriebe |
|---|---|---|
| 24 Stunden | 3 | 1 |
| 1 Woche | 5 | 2 |
| 2 Wochen | 12 | 4 |
| 3 Wochen | 26 | 4 |
| 4 Wochen | 30 | 4 |

| 5 Wochen | 70 | 4 |
| 6 Wochen | 90 | 9 |

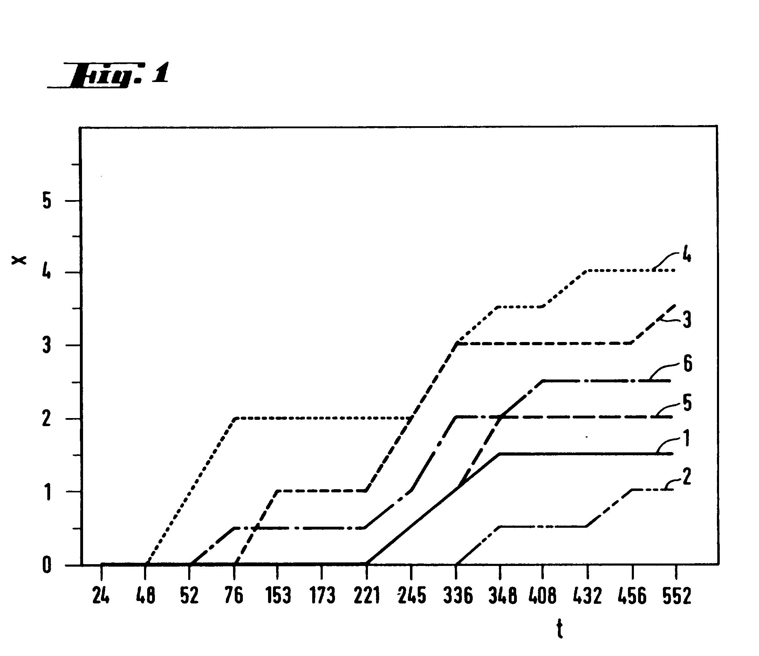

Das mit dem Beschichtungsmittel behandelte Stahlblech wurde einem Salzsprühtest nach DIN 50 021 mit 5 %iger wäßriger Natriumchloridlösung unterworfen. In Fig. 1 sind durch die Kurve 1 die Ergebnisse des Salzsprühtestes dargestellt. Die Bewertungszahl x nach DIN 53 210 richtet sich nach dem Anteil der mit Rost befallenen Oberfläche. Dabei bedeutet die Bewertungszahl x = 0 rostfrei und x = 5 ganzflächiger Rostbefall. Die Zeitachse t hat die Dimension Stunden [h].

Der Salzsprühtest wurde stellvertretend, da zeitsparend, für eine längere Freibewitterung durchgeführt.

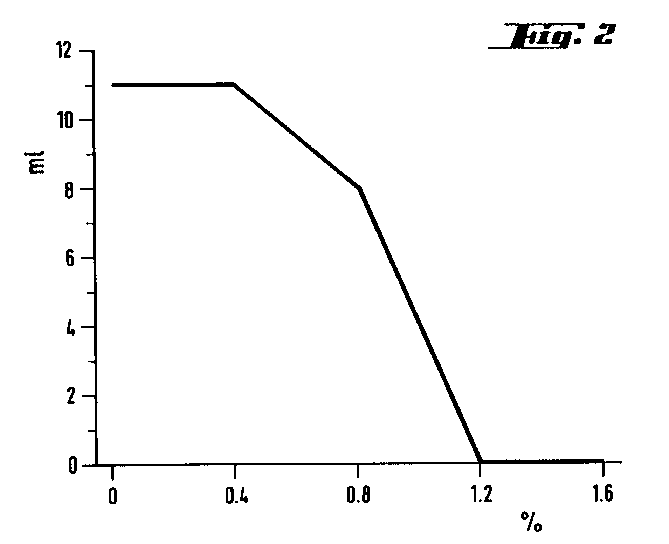

Fig. 2 zeigt die innerhalb von 48 Stunden nach Mischen der Bestandteile des Beschichtungsmittels gemessene Menge (ml, bezogen auf jeweils 50 ml Beschichtungsmittel) an gebildetem Wasserstoff in Abhängigkeit von der eingesetzten Menge (Gew.-%, bezogen auf das Gesamtgewicht des Beschichtungsmittels) der oben beschriebenen hydrophoben, pyrogen hergestellten Kieselsäure. Aus Fig. 2 ist zu entnehmen, daß durch die Zugabe von hydrophober, pyrogen hergestellter Kieselsäure in einer Menge von 1,2 Gew.-%, bezogen auf das Gesamtgewicht des Beschichtungsmittels, die Wasserstoffbildung unterdrückt wird.

**Beispiel 2:**

a) 100 Teile einer 82 %igen Lösung eines bei Raumtemperatur festen Organopolysiloxanharzes aus $PhSiO_{3/2}$- (Ph = Phenylrest) und $(CH_3)_2SiO$-Einheiten mit einem Molverhältnis von 63 : 37 in Xylol, 6 Teile Fettalkoholpolyglycolether (käuflich erwerblich unter dem Handelsnamen "Arlypon IT16" bei der Fa. Grünau) und 100 Teile Wasser wurden mittels eines schnellen Rührers emulgiert.

b) Die Arbeitsweise von Beispiel 1 c) wurde wiederholt mit der Abänderung, daß 47,5 Teile der wäßrigen Siliconemulsion, deren Herstellung oben unter a) beschrieben ist, anstelle der wäßrigen Siliconemulsion von Beispiel 1 a) und 80 Teile Wasser anstelle der 100 Teile Wasser eingesetzt wurden.

Das Beschichtungsmittel wurde mit einer Rakel in einer Naßfilmschichtdicke von 100 μm auf kaltgewalzten, matten Stahl einer Stärke von 0,8 mm aufgetragen. Der Überzug war nach 55 Minuten Trocknen bei Raumtemperatur griffest. Nach 24 Stunden Trocknen bei Raumtemperatur wurden von dem Überzug die MEK-Abriebe und die Wasserabriebe, wie in Beispiel 1 beschrieben, bestimmt. Es wurden MEK-Abriebe (Resistenz gegen Methylethylketon) von 5 und Wassersabriebe (Resistenz gegen Wasser) von mehr als 150 gemessen.

Das mit dem Beschichtungsmittel behandelte Stahlblech wurde einem Salzsprühtest, wie in Beispiel 1 beschrieben, unterworfen. Die Ergebnisse des Salzsprühtestes sind durch Kurve 2 in Fig. 1 dargestellt.

**Vergleichsversuch 1:**

Die Arbeitsweise von Beispiel 1 wurde wiederholt mit der Abänderung, daß 50 Teile einer wäßrigen Natronwasserglaslösung mit einem Feststoffgehalt von 35 % und einem Molverhältnis von $SiO_2$ zu $Na_2O$ von 25,5 : 7,5 (entsprechend einem Gewichtsverhältnis von 28,5 : 8,5) anstelle des wäßrigen Bindemittels von Beispiel 1 und 110 Teile Wasser anstelle von 100 Teilen Wasser eingesetzt wurden.

Das Beschichtungsmittel wurde mit einer Rakel in einer Naßfilmschichtdicke von 100 μm auf kaltgewalzten, matten Stahl einer Stärke von 0,8 mm aufgetragen. Der Überzug war nach 20 Minuten Trocknen bei Raumtemperatur griffest. Nach 24 Stunden Trocknen bei Raumtemperatur wurden von dem Überzug MEK-Abriebe und Wasserabriebe, wie in Beispiel 1 beschrieben, bestimmt. Es wurden MEK-Abriebe (Resistenz gegen Methylethylketon) von mehr als 150 und Wasserabriebe (Resistenz gegen Wasser) von 10 gemessen.

Das mit dem Beschichtungsmittel behandelte Stahlblech wurde einem Salzsprühtest, wie in Beispiel 1 beschrieben, unterworfen. Die Ergebnisse des Salzsprühtestes sind durch Kurve 3 in Fig. 1 dargestellt.

**Vergleichsversuch 2:**

Die Arbeitsweise von Beispiel 1 wurde wiederholt mit der Abänderung, daß 50 Teile eines Ethylsilikatbindemittels mit einem $SiO_2$-Gehalt von 37,5 % (käuflich erwerblich unter dem Handelsnamen "Wacker TES 55" bei der Fa. Wacker-Chemie), das erhalten wird aus Ethylsilikat mit einem $SiO_2$-Gehalt von 40 %, anstelle des wäßrigen Bindemittel von Beispiel 1, 2 Teile anstelle von 4,8 Teilen der in Beispiel 1 beschriebenen Kieselsäure, 30 Teile Xylol und 7,5 Teile Butanol anstelle von 100 Teilen Wasser sowie zusätzlich 10 Teile eines Acrylatharzes (käuflich erwerblich unter dem Handelsnamen "Plexisol PM 709" bei der Fa, Röhm, GmbH) als Verdicker eingesetzt wurden.

Das Beschichungsmittel wurde mit einer Rakel in einer Naßfilmschichtdicke von 100 μm auf kaltgewalzten, matten Stahl einer Stärke von 0,8 mm aufgetragen. Der überzug war nach 105 Minuten Trocknen bei Raumtemperatur griffest, Nach 24 Stunden Trocknen bei Raumtemperatur wurden von dem Überzug die MEK-Abriebe und Wasserabriebe, wie in Beispiel 1 beschrieben, bestimmt. Es wurden MEK-Abriebe (Resistenz gegen Methylethylketon) von 100 und Wasserabriebe (Resistenz gegen Wasser) von mehr als 150 gemessen.

Das mit dem Beschichtungsmittel behandelte Stahlblech wurde einem Salzsprühtest, wie in Beispiel 1 beschrieben, unterworfen. Die Ergebnisse des Salzsprühtestes sind durch Kurve 4 in Fig. 1 dargestellt.

Vergleichsversuch 3:

91,5 Teile eines Ethylsilikatbindemittels mit einem $SiO_2$-Gehalt von 20 %, wobei das Ethylsilikatbindemittel ein Hydrolysat aus 47 Teilen Ethylsilicat mit einem $SiO_2$-Gehalt von 40 % (käuflich erwerblich unter dem Handelsnamen "TES 40" bei der Fa. Wacker-Chemie), 28 Teilen wasserfreiem Ethanol, 19,85 Teilen Methoxypropanol, 0,15 Teilen konz. Salzsäure (37%) und 5 Teilen Wasser ist, wurden mit 363,5 Teilen Zinkstaub mit einem durchschnittlichen Kornstaubdurchmesser von 4 bis 6 μm, 18 Teilen blättchenförmigem Glimmer, 18 Teilen Antisedimentationspaste aus 10 bis 20 % organisch modifiziertem Smektit (käuflich erwerblich unter dem Handelsnamen "Bentone" bei der Fa. Kronos International Inc.) und 9 Teilen einer 40 Gew.-%igen Polyvinylbutyrallösung in Ethanol als Verdicker vermischt.

Das Beschichtungsmittel wurde mit einer Rakel in einer Naßfilmschichtdicke von 100 μm auf kaltgewalzten, matten Stahl einer Stärke von 0,8 mm aufgetragen. Der Überzug war nach 6 Minuten Trocknen bei Raumtemperatur griffest. Nach 24 Stunden Trocknen bei Raumtemperatur wurden von dem Überzug MEK-Abriebe und Wasserabriebe, wie in Beispiel 1 beschrieben, bestimmt. Es wurden MEK-Abriebe (Resistenz gegen Methylethylketon) von 3 und Wasserabriebe (Resistenz gegen Wasser) von mehr als 150 gemessen.

Das mit dem Beschichtungsmittel behandelte Stahlblech wurde einem Salzsprühtest, wie in Beispiel 1 beschrieben, unterworfen. Die Ergebnisse des Salzsprühtestes sind durch Kurve 5 in Fig. 1 dargestellt.

**Vergleichsversuch 4:**

Die Arbeitsweise von Beispiel 1 wurde wiederholt mit der Abänderung, daß 50 Teile einer wäßrigen Phenylmethylsiliconharzemulsion mit einem Feststoffgehalt von 50 % und einem Xylolgehalt von ca. 10 % (käuflich erwerblich unter dem Handelsnamen "Silikophen P40/W" bei der Fa. Tego Chemie Service USA) anstelle der 50 Teile wäßrige Bindemittel von Beispiel 1 und 80 Teile Wasser anstelle der 100 Teile Wasser eingesetzt wurden.

Das Beschichtungsmittel wurde mit einer Rakel in einer Naßfilmschichtdicke von 100 μm auf kaltgewalzten, matten Stahl einer Stärke von 0,8 mm aufgetragen. Der Überzug war erst nach 4 Stunden Trocknen bei Raumtemperatur griffest. Nach 24 Stunden Trocknen bei Raumtemperatur wurden von dem Überzug die MEK-Abriebe und Wasserabriebe, wie in Beispiel 1 beschrieben, bestimmt. Es wurden MEK-Abriebe (Resistenz gegen Methylethylketon) von 2 und Wasserabriebe (Resistenz gegen Wasser) von 3 gemessen.

Das mit dem Beschichtungsmittel behandelte Stahlblech wurde einem Salzsprühtest, wie in Beispiel 1 beschrieben, unterworfen. Die Ergebnisse des Salzsprühtestes sind durch Kurve 6 in Fig. 1 dargestellt.

**Beispiel 3:**

50 Teile einer 42 %igen wäßrigen Kaliummethylsilanolatlösung, die durch Umsetzung von äquivalenten Mengen Methyltrichlorsilan mit Kaliumhydroxid in wäßriger Phase unter Abspaltung von Salzsäure hergestellt wurde, wurden mit 400 Teilen Zinkstaub mit einem durchschnittlichen Kornstaubdurchmesser von 4 bis 6 μm, 4,8 Teilen hydrophober, pyrogen hergestellter Kieselsäure mit einer BET-Oberfläche von 120 ± 20 $m^2$/g (käuflich erwerblich unter dem Handelsnamen "HDK H15" bei der Fa. Wacker-Chemie), 80 Teilen Wasser, 32,5 Teilen blättchenförmigem Glimmer, 20 Teilen Antisedimentationspaste aus 10 bis 20 % organisch modifiziertem Smektit (käuflich erwerblich unter dem Handelsnamen "Bentone" bei der Fa. Kronos International Inc.) und 2 Teilen einer 10 %igen wäßrigen Natriumphosphatlösung (käuflich erwerblich unter dem Handelsnamen "Calgon N" bei der Fa. Merck) vermischt.

Das so erhaltene Beschichtungsmittel wurde mit einer Rakel in einer Naßfilmschichtdicke von 100 μm auf kaltgewalzten, matten Stahl einer Stärke von 0,8 mm aufgetragen. Der Überzug war nach ca. 30 Minuten Trocknen bei Raumtemperatur griffest. Nach 24 Stunden Trocknen bei Raumtemperatur wurde von dem Überzug die Beständigkeit gegen Lösungsmittel bzw.

Wasser geprüft durch Reiben unter leichtem Druck mit einem Wattestäbchen, dessen Ende mit Methylethylketon bzw. Wasser getränkt war. Dabei wurden MEK-Abriebe (Resistenz gegen Methylethylketon) von mehr als 150 und entsprechend Wasserabriebe (Resistenz gegen Wasser) von 80 gemessen.

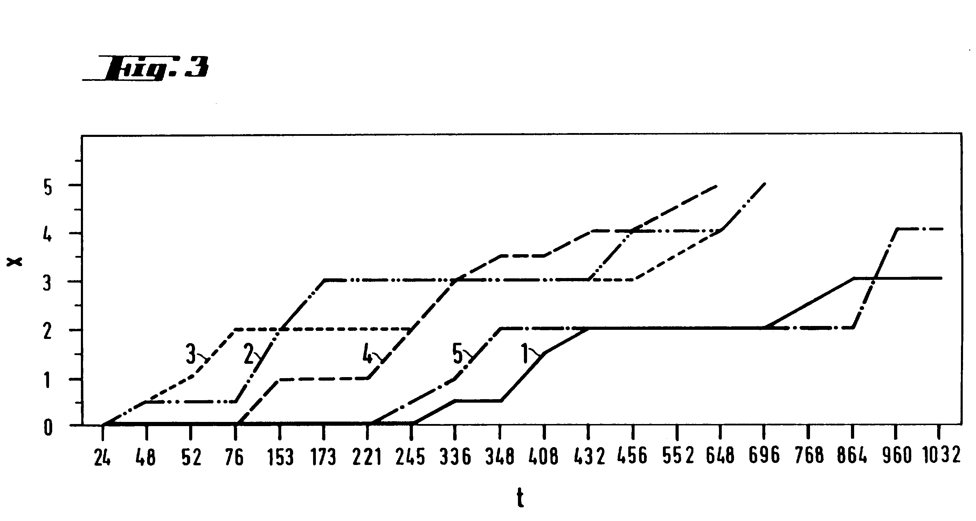

Das mit dem Beschichtungsmittel behandelte Stahlblech wurde einem Salzsprühtest nach DIN 50021 mit 5 %iger wäßriger Natriumchloridlösung unterworfen. In Fig. 3 sind durch die Kurve 1 die Ergebnisse des Salzsprühtestes dargestellt. Die Bewertungszahl x nach DIN 53 210 richtet sich nach dem Anteil der mit Rost befallenen Oberfläche. Dabei bedeutet die Bewertungszahl x = 0 rostfrei und x = 5 ganzflächiger Rostbefall. Die Zeitachse t hat die Dimension Stunden [h].

Der Salzsprühtest wurde stellvertretend, da zeitsparend, für eine längere Freibewitterung durchgeführt.

**Beispiel 4:**

Die Arbeitsweise von Beispiel 3 wurde wiederholt mit der Abänderung, daß 50 Teile einer 46 %igen wäßrigen Lösung einer Mischung von gleichen Teilen Kaliummethylsilanolat und Kaliumpropylsilanolat, die durch Umsetzung von äquivalenten Mengen von Methyltrichlorsilan und Propyltrichlorsilan mit Kaliumhydroxid in wässriger Phase unter Abspaltung von Salzsäure hergestellt wurde, anstelle der wäßrigen Lösung des Kaliummethylsilanolats von Beispiel 3 eingesetzt wurden.

Das Beschichtungsmittel wurde mit einer Rakel in einer Naßfilmschichtdicke von 100 µm auf kaltgewalzten, matten Stahl einer Stärke von 0,8 mm aufgetragen. Der Überzug war nach 23 Minuten Trocknen bei Raumtemperatur griffest. Nach 24 Stunden Trocknen bei Raumtemperatur wurden von dem Überzug die MEK-Abriebe und Wasserabriebe, wie in Beispiel 3 beschrieben, bestimmt. Es wurden MEK-Abriebe (Resistenz gegen Methylethylketon) von mehr als 150 und entsprechend Wasserabriebe (Resistenz gegen Wasser) von mehr als 150 gemessen.

Das mit dem Beschichtungsmittel behandelte Stahlblech wurde einem Salzsprühtest, wie in Beispiel 3 beschrieben, unterworfen. Die Ergebnisse des Salzsprühtestes sind durch Kurve 2 in Fig. 3 dargestellt.

**Vergleichsversuch 5:**

Die Arbeitsweise von Beispiel 3 wurde wiederholt mit der Abänderung, daß 50 Teile einer wäßrigen Natronwasserglaslösung mit einem Feststoffgehalt von 35 % und einem Molverhältnis von $SiO_2$ zu $Na_2O$ von 25,5 : 7,5 (entsprechend einem Gewichtsverhältnis von 28,5 : 8,5) anstelle der wäßrigen Lösung des Kaliummethylsilanolats von Beispiel 3 und 110 Teile Wasser anstelle von 80 Teilen Wasser eingesetzt wurden.

Das Beschichtungsmittel wurde mit einer Rakel in einer Naßfilmschichtdicke von 100 µm auf kaltgewalzten, matten Stahl einer Stärke von 0,8 mm aufgetragen. Der Überzug war nach 20 Minuten Trocknen bei Raumtemperatur griffest. Nach 24 Stunden Trocknen bei Raumtemperatur wurden von dem Überzug MEK-Abriebe und Wasserabriebe, wie in Beispiel 3 beschrieben, bestimmt. Es wurden MEK-Abriebe (Resistenz gegen Methylethylketon) von mehr als 150 und Wasserabriebe (Resistenz gegen Wasser) von 10 gemessen.

Das mit dem Beschichtungsmittel behandelte Stahlblech wurde einem Salzsprühtest, wie in Beispiel 3 beschrieben, unterworfen. Die Ergebnisse des Salzsprühtestes sind durch Kurve 3 in Fig. 3 dargestellt.

**Vergleichsversuch 6:**

Die Arbeitsweise von Beispiel 3 wurde wiederholt mit der Abänderung, daß 50 Teile eines Ethylsilikatbindemittels für 1-Komponenten-Zinkfarben mit einem $SiO_2$-Gehalt von 37,5 % (käuflich erwerblich unter dem Handelsnamen "Wakker TES 55" bei der Fa. Wacker-Chemie) anstelle der wäßrigen Lösung des Kaliummethylsilanolats von Beispiel 3, 2 Teile anstelle von 4,8 Teilen der in Beispiel 3 beschriebenen Kieselsäure, 30 Teile Xylol und 7,5 Teile Butanol anstelle von 80 Teilen Wasser sowie zusätzlich 10 Teile eines Acrylatharzes (käuflich erwerblich unter dem Handelsnamen "Plexisol PM 709" bei der Fa. Röhm GmbH) als Verdicker eingesetzt wurden.

Das Beschichtungsmittel wurde mit einer Rakel in einer Naßfilmschichtdicke von 100 µm auf kaltgewalzten, matten Stahl einer Stärke von 0,8 mm aufgetragen. Der überzug war nach 105 Minuten Trocknen bei Raumtemperatur griffest. Nach 24 Stunden Trocknen bei Raumtemperatur wurden von dem Überzug die MEK-Abriebe und Wasserabriebe, wie in Beispiel 3 beschrieben, bestimmt. Es wurden MEK-Abriebe (Resistenz gegen Methylethylketon) von 100 und Wasserabriebe (Resistenz gegen Wasser) von mehr als 150 gemessen.

Das mit dem Beschichtungsmittel behandelte Stahlblech wurde einem Salzsprühtest, wie in Beispiel 3 beschrieben, unterworfen. Die Ergebnisse des Salzsprühtestes sind durch Kurve 4 in Fig. 3 dargestellt.

**Vergleichsversuch 7:**

91,5 Teile eines Ethylsilikatbindemittels für 2-Komponenten-Zinkfarben mit einem $SiO_2$-Gehalt von 20 %, wobei das Ethylsilikatbindemittel ein Hydrolysat aus 47 Teilen Ethylsilicat mit einem $SiO_2$-Gehalt von 40 % (käuflich erwerblich unter dem Handelsnamen "TES 40" bei der Fa. Wacker-Chemie), 28 Teilen wasserfreiem Ethanol, 19,85 Teilen Methoxypropanol, 0,15 Teilen konz. Salzsäure (37%) und 5 Teilen Wasser ist, wurden mit 363,5 Teilen Zinkstaub mit einem durchschnittlichen Kornstaubdurchmesser von 4 bis 6 µm, 18 Teilen blättchenförmigem Glimmer, 18 Teilen Antisedimentationspaste aus 10 bis 20 % organisch modifiziertem Smektit (käuflich erwerblich unter dem Handelsnamen "Bentone" bei der Fa. Kronos International Inc.) und 9 Teilen einer 40 Gew.-%igen Polyvinylbutyrallösung in Ethanol als Verdicker vermischt.

Das Beschichtungsmittel wurde mit einer Rakel in einer Naßfilmschichtdicke von 100 µm auf kaltgewalzten, matten Stahl einer Stärke von 0,8 mm aufgetragen. Der Überzug war nach 6 Minuten Trocknen bei Raumtemperatur griffest. Nach 24 Stunden Trocknen bei Raumtemperatur wurden von dem Überzug die MEK-Abriebe und Wasserabriebe, wie in Beispiel 3 beschrieben, bestimmt. Es wurden MEK-Abriebe (Resistenz gegen Methylethylketon) von 3 und Wasserabriebe (Resistenz gegen Wasser) von mehr als 150 gemessen.

Das mit dem Beschichtungsmittel behandelte Stahlblech wurde einem Salzsprühtest, wie in Beispiel 3 beschrieben, unterworfen. Die Ergebnisse des Salzsprühtestes sind durch Kurve 5 in Fig. 3 dargestellt.

**Patentansprüche**

1. Wäßrige Beschichtungszusammensetzungen enthaltend (A) wäßriges Bindemittel ausgewählt aus der Gruppe, die aus

    (A1) wäßrige Bindemittel enthaltend

        (a) Organopolysiloxanharze und
        (b) Monoorganosilanolate und/oder dessen durch Wasserabspaltung entstehende Kondensationsprodukte und
        (c) Wasser

    und

    (A2) wäßrige Bindemittel enthaltend

        (b) Monoorganosilanolate und/oder deren durch Wasserabspaltung entstehende Kondensationsprodukte und
        (c) Wasser, besteht,

    (B) Metallpulver,

    (C) gegebenenfalls Siliciumdioxide mit einer BET-Oberfläche von mindestens 50 m$^2$/g, die gegebenenfalls hydrophobiert sind, und

    (D) gegebenenfalls Wasser.

2. Wäßrige Beschichtungszusammensetzung nach Anspruch 1, dadurch gekennzeichnet, daß das wäßrige Bindemittel (A) als Organopolysiloxanharze solche aus Einheiten der Formel

$$R_a SiO_{\frac{4-a}{2}} \qquad (I),$$

    die 0 bis 10 Gew.-% Si-gebundene Hydroxylgruppen und/oder Alkoxygruppen enthalten,
    wobei R gleich oder verschieden ist und einen einwertigen Kohlenwasserstoffrest mit 1 bis 18 Kohlenstoffatomen je Rest und
    a 0, 1, 2 oder 3, durchschnittlich 1 bis 1,5, bedeutet, verwendet.

3. Wäßrige Beschichtungszusammensetzung nach Anspruch 1 oder 2, dadurch gekennzeichnet, daß als wäßrige Bindemittel (A) Monoorganosilanolate der Formel

$$R^1 Si(OM)_m (OH)_{3-m} \qquad (II),$$

wobei R$^1$ gleich oder verschieden ist und einen einwertigen Kohlenwasserstoffrest mit 1 bis 8 Kohlenstoffatomen je Rest,
M ein Alkalimetallkation oder eine Ammoniumgruppe und
m eine ganze oder gebrochene Zahl im Wert von 0,1 bis 3 bedeutet,

verwendet werden.

4. Wäßrige Beschichtungszusammensetzung nach einem oder mehreren der Ansprüche 1-3, dadurch gekennzeichnet, daß als Metallpulver (B) Zinkstaub mit einer durchschnittlichen staubkorngröße von 2 bis 9 μm verwendet wird.

5. Wäßrige Beschichtungszusammensetzung nach einem oder mehreren der Ansprüche 1-4 dadurch gekennzeichnet, daß sie

(A) 100 Gew.-teile wäßriges Bindemittel

(B) 10 bis 1500 Gew.-teile Metallpulver,

(C) gegebenenfalls 0 bis 5 Gew.-teile Siliciumdioxide mit einer BET-Oberfläche von mindestens 50 m$^2$/g, die gegebenenfalls hydrophobiert sind, und

(D) 0 bis 300 Gew.-teile Wasser

enthält.

6. Verfahren zur Herstellung der wäßrigen Beschichtungszusammensetzung nach einem cder mehreren der Ansprüche 1-5 dadurch gekennzeichnet, daß

(A) wäßrige Bindemittel mit

(B) Metallpulver,

(C) gegebenenfalls Siliciumdioxiden mit einer BET-oberfläche von mindestens 50 m$^2$/g, die gegebenenfalls hydrophobiert sind, und

(D) gegebenenfalls Wasser

sowie gegebenenfalls weiteren Stoffen vermischt werden.

7. Verfahren zur Herstellung der wäßrigen Beschichtungszusammensetzung nach Anspruch 6, indem das wäßrige Bindemittel (A) durch Vermischen wäßriger Emulsionen von Organopolysiloxanharzen (a) mit einer wäßrigen Lösung von Monoorganosilanolaten (b) hergestellt wird.

8. Verfahren zur Herstellung der wäßrigen Beschichtungszusammensetzung nach Anspruch 7, indem das wäßrige Bindemittel (A) durch Vermischen wäßriger Lösungen von Monoorganosilanolaten (b) in Mengen von 0,1 bis 50 Gew.-%, bezogen auf das Gesamtgewicht der wäßrigen Emulsionen von Organopolysiloxanharzen (a), eingesetzt wird, wobei die wäßrigen Lösungen 10 bis 70 Gew.-% Monoorganosilanolate (b) und die wäßrigen Emulsionen 25 bis 75 Gew.-% Organopolysiloxanharze (a) enthalten.

9. Verwendung einer wäßrigen Lösung von Organopolysiloxanharzen und/oder Monoorganosilanolaten und/oder deren durch Wasserabspaltung entstehenden Kondensationsprodukten als Bindemittel für Beschichtungszusammensetzungen, die Metallpulver enthalten, in Korrosionsschutzmitteln.

**Claims**

1. Aqueous coating compositions comprising (A) aqueous binder selected from the group which consists of

(A1) aqueous binders comprising

(a) organopolysiloxane resins and
(b) monoorganosilanolates and/or the condensation products thereof formed by elimination of water, and
(c) water

and

(A2) aqueous binders comprising

(b) monoorganosilanolates and/or the condensation products thereof formed by elimination of water, and
(c) water,

(B) metal powder,

(C) if desired, silicon dioxides having a BET surface area of at least 50 $m^2/g$, which are hydrophobicized if desired, and

(D) if desired, water.

2. Aqueous coating composition according to Claim 1, characterized in that the aqueous binder (A) is used [sic] as organopolysiloxane resins those comprising units of the formula

$$R_a SiO_{\frac{4-a}{2}} \qquad (I),$$

which contain from 0 to 10 % by weight of Si-bonded hydroxyl groups and/or alkoxy groups,
in which R is in each case identical or different and is a monovalent hydrocarbon radical having 1 to 18 carbon atoms per radical, and
a is 0, 1, 2 or 3, on average from 1 to 1.5.

3. Aqueous coating composition according to Claim 1 or 2, characterized in that the aqueous binders (A) used are monoorganosilanolates of the formula

$$R^1 Si(OM)_m(OH)_{3-m} \qquad (II),$$

in which $R^1$ is in each case identical or different and is a monovalent hydrocarbon radical having 1 to 8 carbon atoms per radical,
M is an alkali metal cation or an ammonium group, and
m is an integral or fractional number whose value is from 0.1 to 3.

4. Aqueous coating composition according to one or more of Claims 1-3, characterized in that the metal powder (B) used is zinc dust having an average dust particle size of from 2 to 9 μm.

5. Aqueous coating composition according to one or more of Claims 1-4, characterized in that it contains

(A) 100 parts by weight of aqueous binder

(B) from 10 to 1500 parts by weight of metal powder,

(C) if desired, from 0 to 5 parts by weight of silicon dioxides having a BET surface area of at least 50 $m^2/g$, which are hydrophobicized if desired, and

(D) from 0 to 300 parts by weight of water.

6. Process for the preparation of the aqueous coating composition according to one or more of Claims 1-5, characterized in that

(A) aqueous binders are mixed with

(B) metal powder,

(C) if desired, silicon dioxides having a BET surface area of at least 50 m$^2$/g, which are hydrophobicized if desired, and

(D) if desired, water

and, if desired, further substances.

7. Process for the preparation of the aqueous coating composition according to Claim 6, in which the aqueous binder (A) is prepared by mixing aqueous emulsions of organopolysiloxane resins (a) with an aqueous solution of monoorganosilanolates (b).

8. Process for the preparation of the aqueous coating composition according to Claim 7, in which the aqueous binder (A) is employed by mixing aqueous solutions of monoorganosilanolates (b) in quantities of from 0.1 to 50 % by weight, based on the overall weight of the aqueous emulsions of organopolysiloxane resins (a), the aqueous solutions containing from 10 to 70 % by weight of monoorganosilanolates (b) and the aqueous emulsions containing from 25 to 75 % by weight of organopolysiloxane resins (a).

9. Use of an aqueous solution of organopolysiloxane resins and/or monoorganosilanolates and/or the condensation products thereof formed by elimination of water as binders for coating compositions comprising metal powder in anticorrosion compositions.

**Revendications**

1. Compositions aqueuses de revêtement, contenant :

(A) un liant aqueux choisi dans le groupe qui se compose de

(A1) un liant aqueux contenant :

(a) une résine organopolysiloxane, et
(b) un monoorganosilanolate et/ou ses produits de condensation formés par élimination d'eau, et
(c) de l'eau;

et
(A2) un liant aqueux contenant :

(b) un monoorganosilanolate et/ou ses produits de condensation formés par élimination d'eau, et
(c) de l'eau;

(B) une poudre métallique;
(C) facultativement, des dioxydes de silicium avec une surface BET d'au moins 50 m$^2$/g, qui sont facultativement rendus hydrophobes, et
(D) facultativement, de l'eau.

2. Composition aqueuse de revêtement suivant la revendication 1, caractérisée en ce que le liant aqueux (A) utilise comme résine organopolysiloxane, celles constituées d'unités de formule

$$R_a SiO_{(4-a)/2} \qquad (I),$$

qui contiennent de 0 à 10% en poids de groupes hydroxyle et/ou de groupes alcoxy liés à Si,
où R est identique ou différent et représente un radical hydrocarbure monovalent avec 1 à 18 atomes de carbone par radical, et
a représente 0, 1, 2 ou 3, en moyenne 1 à 1,5.

3. Composition aqueuse de revêtement suivant la revendication 1 ou 2, caractérisée en ce qu'on utilise comme liant aqueux (A), un monoorganosilanolate de formule

$$R^1Si(OM)_m(OH)_{3-m} \qquad (II),$$

où $R^1$ est identique ou différent et représente un radical hydrocarbure monovalent avec 1 à 8 atomes de carbone par radical,
M représente un cation de métal alcalin ou un groupe ammonium, et
m représente un nombre entier ou fractionnaire de valeur comprise entre 0,1 et 3.

4. Composition aqueuse de revêtement suivant l'une ou plusieurs des revendications 1 à 3, caractérisée en ce que l'on utilise comme poudre métallique (B), de la poussière de zinc avec une taille moyenne des particules de poussière de 2 à 9 µm.

5. Composition aqueuse de revêtement suivant l'une ou plusieurs des revendications 1 à 4, caractérisée en ce qu'elle contient

(A) 100 parties en poids d'agent liant aqueux;
(B) 10 à 1500 parties en poids de poudre métallique;
(C) facultativement, 0 à 5 parties en poids de dioxydes de silicium avec une surface BET d'au moins 50 m²/g, qui sont facultativement rendus hydrophobes, et
(D) 0 à 300 parties en poids d'eau.

6. Procédé de préparation de la composition aqueuse de revêtement suivant l'une ou plusieurs des revendications 1 à 5, caractérisé en ce que l'on mélange

(A) le liant aqueux avec
(B) la poudre métallique,
(C) facultativement, des dioxydes de silicium avec une surface BET d'au moins 50 m²/g, qui sont facultativement rendus hydrophobes, et
(D) facultativement, l'eau,

ainsi que facultativement d'autres matières.

7. Procédé de préparation de la composition aqueuse de revêtement suivant la revendication 6, dans lequel le liant aqueux (A) est préparé par mélange d'une émulsion aqueuse de la résine organopolysiloxane (a) avec une solution aqueuse du monoorganosilanolate (b).

8. Procédé de préparation de la composition aqueuse de revêtement suivant la revendication 7, dans lequel le liant aqueux (A) est préparé par mélange d'une solution aqueuse du monoorganosilanolate (b) en des quantités de 0,1 à 50% en poids sur base du poids total de l'émulsion aqueuse de la résine organopolysiloxane (a), où la solution aqueuse contient de 10 à 70% en poids de monoorganosilanolate (b) et l'émulsion aqueuse, de 25 à 75% en poids de résine organopolysiloxane (a).

9. Utilisation d'une solution aqueuse de résine organopolysiloxane et/ou de monoorganosilanolate et/ou de ses produits de condensation formés par élimination d'eau, comme agent liant pour des compositions de revêtement qui contiennent de la poudre métallique, dans des agents de protection anticorrosive.

Fig. 1

EP 0 665 868 B1

Fig. 2

EP 0 665 868 B1

*Fig. 3*